(19) Europäisches Patentamt
European Patent Office
Office européen des brevets

(11) **EP 1 857 562 B1**

(12) **EUROPEAN PATENT SPECIFICATION**

(45) Date of publication and mention
of the grant of the patent:
**01.10.2014 Bulletin 2014/40**

(51) Int Cl.:
*C21D 8/02* (2006.01)     *C22C 38/02* (2006.01)
*C22C 38/04* (2006.01)     *C21D 9/46* (2006.01)
*C22C 38/12* (2006.01)

(21) Application number: **06711586.5**

(22) Date of filing: **12.01.2006**

(86) International application number:
**PCT/JP2006/300263**

(87) International publication number:
**WO 2006/077760 (27.07.2006 Gazette 2006/30)**

(54) **BAKE-HARDENING HOT-ROLLED STEEL SHEET WITH EXCELLENT WORKABILITY AND PROCESS FOR PRODUCING THE SAME**

WÄRMEHÄRTENDE, HEISSGEWALZTE STAHLFOLIE MIT EXZELLENTER VERARBEITBARKEIT UND HERSTELLUNGSVERFAHREN DAFÜR

TOLE D'ACIER LAMINEE A CHAUD DURCIE PAR CUISSON PRESENTANT UNE APTITUDE ELEVEE AU FAÇONNAGE ET PROCEDE PERMETTANT DE PRODUIRE CETTE TOLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.01.2005 JP 2005010210**

(43) Date of publication of application:
**21.11.2007 Bulletin 2007/47**

(60) Divisional application:
**14179763.9**

(73) Proprietor: **Nippon Steel & Sumitomo Metal Corporation**
**Tokyo 100-8071 (JP)**

(72) Inventors:
• **YOKOI, Tatsuo**
**1,Oaza-Nishinosu**
**Oita-shi**
**Oita 8700902 (JP)**
• **YAMADA, Tetsuya**
**1,Oaza-Nishinosu**
**Oita-shi**
**Oita 8700902 (JP)**
• **TASAKI, Fuminori**
**1,Oaza-Nishinosu**
**Oita-shi**
**Oita 8700902 (JP)**

(74) Representative: **Vossius & Partner**
**Siebertstrasse 4**
**81675 München (DE)**

(56) References cited:
**EP-A1- 0 952 235         JP-A- 4 032 512**
**JP-A- 9 087 798         JP-A- 11 092 859**
**JP-A- 2000 239 791     JP-A- 2001 152 254**
**JP-A- 2002 030 385     US-A1- 2004 007 298**

• **LEYSEN F ET AL: "Dilatometric measurements on the transformation behaviour of Nb-added CSiMn TRIP steels", MATERIALS SCIENCE FORUM, AEDERMANNSFDORF, CH, [Online] vol. 426-432, no. 2, 7 July 2003 (2003-07-07), pages 1101-1106, XP009149850, ISSN: 0255-5476 Retrieved from the Internet: URL:20030711> [retrieved on 2003-07-07]**
• **TIMOKHINA I B ET AL: "Effect of alloying elements on the microstructure-property relationship in thermomechanically processed C-Mn-Si TRIP steels", STEEL RESEARCH, DUESSELDORF, DE, vol. 73, no. 6-7, 1 June 2002 (2002-06-01) , pages 274-279, XP009134064, ISSN: 0177-4832**

**Description**

The present invention relates to a bake-hardening hot-rolled steel sheet with excellent workability and a method for manufacturing the same. In detail, it relates to a steel sheet including a microstructure of polygonal ferrite having an average particle diameter of 2 to 8 $\mu$m, by which not only parts requiring severe working can be readily formed, but also, even in a steel sheet having a tensile strength of 370 to 640 MPa class, a strength of press material corresponding to the design strength when a steel sheet of 540 to 780 MPa class is applied, can be obtained by strain introduction by means of pressing, and a baking finish treatment.

Recently, in order to improve the fuel efficiency of automobiles and the like, with an object of reduction in weight, the application of light metals such as A1 alloy and high strength steel sheets to automobile members is in progress. However, regardless of the advantage of high specific strength, light metals such as Al alloy are remarkably expensive compared to steels, and therefore the application thereof is limited to specific usages. Consequently, in order to promote the reduction in weight for of automobiles at a lower cost in a wider range, steel sheets need to be highly strengthened.

Since the high strengthening of materials generally involves deterioration of material properties such as the formability (workability), the key to the development of high strength steel sheets depends on how to achieve the high strengthening without deteriorating the material properties. In particular, as to the properties required for steel sheets for inner plate members, structural members, and suspension members, burring workability, ductility, fatigue resistance, and corrosion resistance and the like are important, and how to balance the high strengthening and these properties at a high level, is important.

In this manner, in order to satisfy both of the high strengthening and the various properties, in particular, formability, TRIP (Transformation Induced Plasticity) steels are disclosed in which the steel microstructure includes retained austenite, and thereby the TRIP phenomenon is developed during the formation thereof, so as to greatly improve the formability (ductility and deep drawability) (for example, refer to JP-A-2000-169935 and JP-A-2000-169936.

However, these techniques demonstrates, at a strength level of about 590 MPa, a total elongation of about 30% and excellent deep drawability (LDR: limiting drawing ratio) due to the occurrence of TRIP phenomenon by the retained austenite. However, in order to obtain a steel sheet having strength within the range of 370 to 540 MPa, the amounts of elements such as C, Si, and Mn, have to be inevitably reduced. If the elements such as C, Si, and Mn are reduced to realize the strength within the range of 370 to 540 MPa class, there is a problem of being unable to maintain amount of retained austenite required for obtaining the TRIP phenomenon in the microstructure at room temperature. Moreover, the above techniques do not take into consideration of the improvement of burring workability. Consequently, in the current state, it is difficult to apply high strength steel sheets having strength of 590 MPa or more class to members in which steel sheet having strength on the order of about 270 to 340 MPa class is currently used, without first improving operations and equipment used during pressing. The only realistic solution for the time being is to use steel sheet having strength of about 370 to 540 MPa class. On the other hand, requirements for reduction of gauges are recently more and more increased in order to achieve the reduction in weight for automobile bodies, and it is therefore important for reduction in weight for automobile body to maintain pressed product strength as much as possible, based on the premise of reducing gauges.

Bake-hardening (BH) steel sheet has been proposed as a way of solving these problems because it has low strength during press molding and improves the strength of pressed products as a result of introducing stress due to pressing and subsequent baking finish treatment.

It is effective to increase solute C and solute N so as to improve bake hardenability; however, increases in these solute elements present in the solid solution worsen aging deterioration at normal temperatures. Consequently, it is important to develop a technology that can allow both bake hardenability and resistance to aging deterioration at normal temperatures.

On the basis of the requirements described above, technologies are disclosed for realizing both bake hardenability and resistance to aging deterioration at normal temperatures, in which bake hardenability is improved by increasing the amount of solute N, and the diffusion of solute C and solute N at normal temperatures is inhibited by an effect of increasing grain boundary surface area caused by grain refining of crystal grains (for example, refer to JP-A-10-183301 and JP-A-2000-297350).

However, refining the crystal grains gives concern of deterioration of press formability. Moreover, if suspension members and inner plate members are the subject, regardless of the needs for excellent burring workability, the burring workability is considered to be inappropriate since the microstructure is ferrite-pearlite.

Leysen F. et al., "Dilatometric Measurements on the Transformation Behaviour of Nb-added CSiMn TRIP Steels", Mat. Sc. Forum, vol. 426-432, No. 2, 7 July 2003, p. 1101/6, discloses the effect of Nb-addition on the transformation behavior of CSiMn TRIP steels.

US-A-2004/0007298 and EP-A-0 952 235 also relate to a TRIP steel.

Here, the present invention provides a bake-hardening hot-rolled steel sheet with excellent workability which has excellent workability, by which a bake-hardening amount of 50 MPa or more can be obtained stably in a strength range of 370 to 640 MPa class, and a method for manufacturing the same. That is, the present invention aims to provide a bake-hardening hot-rolled steel sheet with excellent workability including a microstructure that develops excellent workability that allows to manufacture pressed product having strength equivalent to that of pressed product manufactured by applying a 540 to 780 MPa class steel sheet as a result of the introduction of pressing stress and baking finish treatment, even when the tensile strength of the hot-rolled steel sheet is 370 to 640 MPa, and a method for manufacturing that steel sheet inexpensively and stably.

The inventors of the present invention conducted extensive research so as to obtain a steel sheet having superior bake hardenability and superior corrosion resistance after

coating as well as excellent workability, with the emphasis on a production process for 370 to 490 MPa-class steel sheet produced on an industrial scale using ordinary production equipment currently in use.

As a result, the inventors of the present invention newly found that, a steel sheet which contains C of 0.01 to 0.2%, Si of 0.01 to 2%, Mn of 0.1 to 2%, P of 0.1 % or less, S of 0.03% or less, Al of 0.001 to 0.1%, N of 0.01% or less, Nb of 0.005 to 0.05%, and as a remainder, Fe and unavoidable impurities, in which the microstructure is a polygonal ferrite and/or a continuous-cooled microstructure having an average particle diameter of 2 $\mu$m to 8 $\mu$m, and the grain boundary abundance ratio of solute C and/or solute N is 0.28 or lower, is very effective, and have achieved the present invention.

Thus, the object above can be achieved by the features specified in the claims.

By using the bake-hardening hot-rolled steel sheet with excellent workability of the present invention, not only parts requiring severe working can be readily formed, but also a bake-hardening amount of 50 MPa or more can be obtained stably in a strength range of 3 70 to 640 MPa class. As a result, even when the tensile strength of the steel sheet is 370 to 640 MPa, a pressed product having strength equivalent to the design strength of pressed product manufactured by applying a 540 to 780 MPa class steel sheet can be manufactured as a result of the introduction of pressing stress and baking finish treatment. From the above, the present invention can be said to be a highly industrially valuable invention.

The invention is described in detail in conjunction with the drawings, in which;

FIG. 1 shows the relation between crystal grain diameter and bake-hardening amount,
FIG. 2 shows the relation between crystal grain diameter and yield ratio, duch
FIG. 3 shows the relation between grain boundary abundance ratio of solute C and solute N, and maximum peeling width.

The following provides an explanation of the results of basic research leading to the present invention.

The following experiments were performed in order to examine relations between the microstructure of steel sheets and bake hardenability, corrosion resistance after coating, or workability. Slabs having the steel components shown in Table 1 were melted to prepare steel sheets having a thickness of 2 mm produced in various production processes. The bake hardenability, the corrosion resistance after coating, the yield ratio, the microstructure, and the abundant state of solute C and/or solute N thereof were examined.

Table 1

|  | | | | | | | | (mass %) |
| --- | --- | --- | --- | --- | --- | --- | --- | --- |
|  | C | Si | Mn | P | S | Al | N | Nb |
| Nb added | 0.068 | 0.95 | 1.22 | 0.009 | 0.003 | 0.014 | 0.0029 | 0.025 |
| Nb not added | 0.065 | 1.01 | 1.20 | 0.011 | 0.003 | 0.015 | 0.0031 | 0.001 |

The bake hardenability was evaluated in accordance with the following procedure. No. 5 test pieces as described in JIS Z 2201 were cut out from each steel sheet. Preliminary tensile strain of 2% was applied to these test pieces, and then the test pieces were subjected to heat treatment corresponding to a baking finish treatment at 170°C for 20 minutes, after which the tensile test was performed again. The tensile test was performed in accordance with the method of JIS Z 2241. Here, the bake-hardening amount is defined as the value obtained by subtracting a flow stress of the preliminary tensile strain of 2% from the upper yield point obtained in the repeated tensile test.

The corrosion resistance after coating was evaluated in accordance with the following procedure. Firstly, the produced steel sheets were acid-washed, and then subjected to phosphating for adhering a zinc phosphate film of 2.5 g/m². Furthermore, electrodeposition coating of the thickness of 25 $\mu$m was performed on the top surface thereof, and then a baking finish treatment was conducted at 170°C for 20 minutes. Then, the electrodeposition coated film was cut in for a length of 130 mm with a sharp-pointed knife until reaching the steel surface, and sprayed with 5% saline solution at 35°C for 700 hours under a saline spray condition shown in JIS Z 2371. Then, a tape (405A-24 JIS Z 1522, manufactured by Nichiban Company, Ltd.) having a width of 24 mm was adhered over the cut part in parallel therewith, in a length of 130 mm. After this tape was peeled off, the maximum peeling width of the coated film was measured.

On the other hand, the microstructure was examined in accordance with the following method. Firstly, samples cut out from a location of 1/4W or 3/4W of the width (W) of the steel sheets were ground along the cross-section in the direction of rolling, and then were etched using a nital reagent. Observation was performed in the fields at 1/4t of the sheet thickness (t) at 200-fold to 500-fold magnification using an optical microscope, and photographs of the metal structure were taken. Here, the volume fraction of the microstructure is defined as the area fraction in the photographs of the metal structure. The average grain diameter is defined as follows. Firstly, if the microstructure is a polygonal ferrite, the crystal grain size G was obtained by the comparison method or the cutting method described in JIS G 0552. If the microstructure is a continuous-cooled microstructure, by intentionally using the cutting method described in JIS G 0552, which is inherently used to obtain the crystal grain size of polygonal ferrite grains, the grain size number G was obtained from the measurement. Next, using the obtained crystal grain size G, the number m of the crystal grains per 1 mm$^2$ of the cross-sectional area was obtained from the equation of $m = 8 \times 2^G$. The average grain diameter $d_m$ obtained from this number m using the equation of $d_m = 1/(\sqrt{m})$, is defined as the average grain diameter of the polygonal ferrite and/or the continuous-cooled microstructure. Here, the continuous-cooled microstructure (Zw) is a microstructure that is defined as a transformation structure at an intermediate stage between a microstructure that contains polygonal ferrite and pearlite formed by a diffusion mechanism, and martensite formed by a shearing mechanism in the absence of diffusion, as described in "Recent Research on the Bainite Structure of Low Carbon Steel and its Transformation Behavior-Final Report of the Bainite Research Committee", Bainite Research Committee, Society on Basic Research, the Iron and Steel Institute of Japan, (1994, the Iron and Steel Institute of Japan). That is, as described on sections 125 to 127 of the above reference in terms of the structure observed by optical microscopy, the continuous-cooled microstructure (Zw) is defined as a microstructure which mainly includes Bainitic ferrite ($\alpha°_B$), Granular bainitic ferrite ($\alpha_B$), and Quasi-polygonal ferrite ($\alpha_q$), and additionally includes small amounts of retained austenite ($\gamma_r$) and Martensite-austenite (MA). Regarding $\alpha_q$, the internal structure does not appear as a result of etching in the same manner as polygonal ferrite (PF), however it has an acicular form, and thus is clearly distinguished from PF. Here, assuming that the boundary length of the target crystal grain is taken to be lq and its equivalent circular diameter is taken to be dq, grains in which their ratio of (lq/dq) satisfies the relation of $1q/dq \geq 3.5$ are $\alpha_q$. The continuous-cooled microstructure (Zw) can be defined as a microstructure including any one or two or more of $\alpha°_B$, $\alpha_B$, $\alpha_q$, $\gamma_r$, and MA, provided that the total small amount of $\gamma_r$ and MA is 3% or less.

Next, the grain boundary abundance ratio of solute C and/or solute N is measured. The grain boundary abundance ratio of solute C and/or solute N in the present invention is defined as a value obtained by dividing the total amount of the solute C and/or the solute N present in the grain boundary, by the total amount of the solute C and/or the solute N. This value may be a value obtained by calculating the sole measurement value of the solute C or the solute N. Alternatively, a value obtained by calculating the added measurement value of the solute C and the solute N, may be also employed.

In order to measure the solute C present in the grain boundary or inside the grains, a three dimensional atom probe method was used. The measurement condition was such that the temperature of the sample location was about 70K, the probe full voltage was 10 to 15 kV, and the pulse ratio was 25%. The respective samples were measured three times respectively in each of the grain boundary and inside the grains, and the average value thereof was used as the representative value. Background noise and the like were eliminated from the measurement value. The obtained value was converted into C-excess (atm/nm$^2$) defined as the atomic density per unit grain boundary area, and then was further converted into the total amount of grain boundary face segregation from the following equation using the grain boundary volume ratio Rb.

$$\text{total amount of grain boundary face segregation} = \text{average C-excess} \times \text{Rb} \times 12$$

$$\text{(atomic weight of C) / 56 (atomic weight of Fe)}$$

Here, Rb is a value defined from the following equation, assuming that one side of a rectangular parallelepiped grain is D and the grain boundary segregation width is W = 2a (a = 2 nm).

$$\text{Rb} = \{D^3 - (D - 2a)^3\}/D^3 = 3(W/D) - 3(W/D)^2 + (W/D)^3$$

The grain boundary abundance ratio of a solute C and/or solute N is a value obtained by dividing the total amount of grain boundary face segregation obtained by the above, by the amount of solute C obtained by the internal friction method.

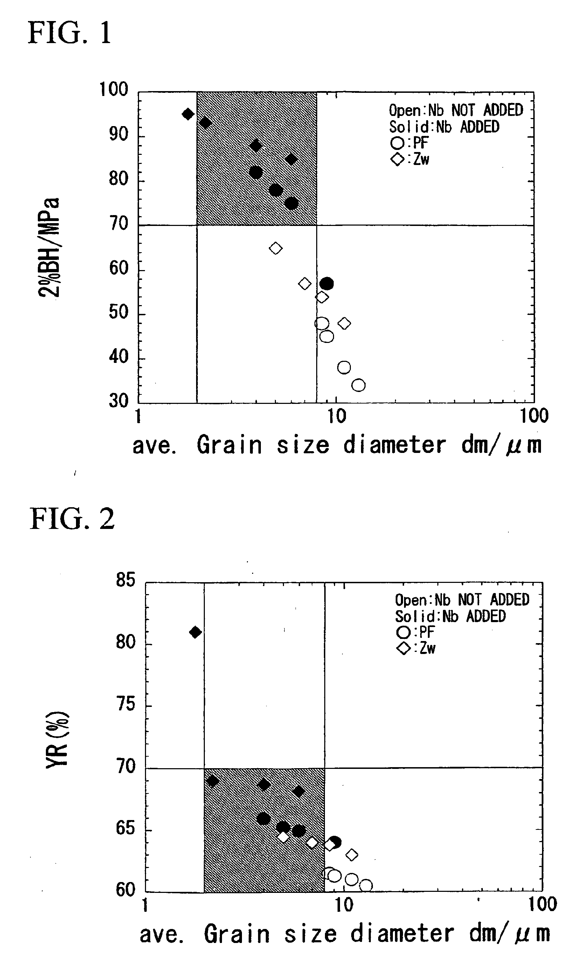

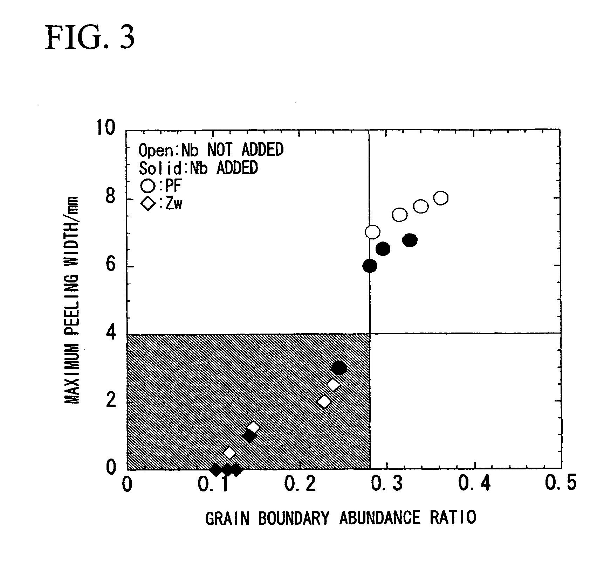

Concerning the measurement results of the bake-hardening amount and the like in the above method, FIG. 1 shows the relation between average crystal grain diameter and bake-hardening amount, with respect to the presence/absence of Nb addition, and the microstructure. The bake-hardening amount and the average crystal grain diameter are strongly correlated. It was newly found that, particularly in the Nb added steel, when the crystal grain diameter was 8 $\mu$m or less, the bake-hardening amount (2%BH) became 70 MPa or more. Moreover, FIG. 2 shows the relation between average crystal grain diameter and yield ratio (YR), with respect to the presence/absence of Nb addition, and the microstructure. In the Nb added steel, when the crystal grain diameter is 2 $\mu$m or more, the yield ratio is not increased even in fine grains, and the yield ratio is 70% or less. Consequently, workability such as uniform elongation is excellent. FIG. 3 shows the relation between grain boundary abundance ratio of solute C and/or solute N, and maximum peeling width. When the grain boundary abundance ratio is 0.28 or lower, the maximum peeling width is improved to 4 mm or less.

This mechanism is not completely understood; however, Nb addition provides a dragging effect in a solid state of Nb and/or a pinning effect as carbonitride precipitates, thereby suppressing recovery/recrystallization and grain growth of austenite during rolling or after rolling, delaying the $\gamma/\alpha$ transformation, and decreasing the transformation temperature. It is considered that the above result was obtained because the decrease in transformation temperature has an effect of increasing the supersaturation of the solute C and the solute N which are effective for increasing the bake-hardening amount. Furthermore, Nb has an effect of refining crystal grains after transformation. Generally, since refining of crystal grains increases the yield strength, the yield ratio tends to be increased and uniform elongation tends to be decreased. Particularly, if the grain diameter is less than 5 $\mu$m, this tendency becomes remarkable; however, it is considered that Nb addition has an effect of making it easy to obtain the continuous-cooled microstructure, and suppressing the increase in yield ratio by introducing a large amount of transformation dislocation, even if the crystal grain diameter is less than 5 $\mu$m. However, if the grain diameter is less than 2 $\mu$m, the effect disappears. Moreover, if C, N, and the like are segregated too much in the grain boundary, a local battery is formed due to microscopic nonuniformity of the composition, the dissolution of the Fe ion is promoted, and thus the corrosion resistance is deteriorated. Therefore, it is considered that the corrosion resistance gets worse if the grain boundary abundance ratio of these atoms exceeds 0.28.

In the present invention, it should be noted that not only the bake-hardening amount at 2% preliminary strain evaluated in the above is excellent, but also the bake-hardening amount at 10% preliminary strain is 30 MPa or more even with N $\leq$ 0.01%, and 30 MPa or more of amount of increase in tensile strength ($\Delta$TS) at 10% preliminary strain can be obtained.

Next is an explanation of the reason for limiting the chemical components of the present invention. Hereunder, unit % showing the content of chemical components is mass %.

C is one of the most important elements in the present invention. If the content of C is more than 0.2%, not only the amount of carbides acting as origins of burring cracks increases, resulting in deterioration of the hole expanding ratio, but also the strength ends up increasing, resulting in deterioration of workability. Consequently, the content of C is set to 0.2% or less. It is preferably less than 0.1 % in consideration of ductility. Moreover, if the content of C is less than 0.01 %, sufficient solute C that is important for bake-hardening is not obtained, resulting in concern of a decrease in the bake-hardening amount. Therefore, it is set to 0.01% or more.

Since Si has the effect of inhibiting the precipitation of iron carbides that act as origins of burring cracks during cooling, Si is added at a content of 0.01 % or more. However, the effect is saturated when added at a content of more than 2%. Consequently, the upper limit is set to 2%. Furthermore, if the content of Si is more than 1%, there is concern of generation of a tiger stripe scale pattern, which disfigures the aesthetic appearance of the surface and also the phosphating property is deteriorated. Therefore, the upper limit of the content of Si is preferably 1%.

Mn has an effect of expanding the temperature range of the austenite region towards lower temperatures. during cooling after completion of rolling. Mn is added at a content of 0.1 % or more. However, since the effect of Mn is saturated when added at a content of more than 2%, the upper limit is set to 2%. Moreover, if elements other than Mn that inhibit the occurrence of hot cracks due to S are not adequately added, Mn is preferably added at a content that satisfies Mn/S $\geq$ 20, in mass %. Furthermore, if Mn is added at a content that satisfies Si+Mn of more than 3%, the strength becomes excessively high, and this causes deterioration of workability. Therefore, the upper limit of the content of Mn is preferably 3%.

P is an impurity and its content is preferably as low as possible. If the content of P is more than 0.1%, workability and weldability are negatively affected. Therefore, the content of P is set to 0.1% or less. However, it is preferably 0.02% or less in consideration of the hole expanding ratio and weldability.

S generates A type inclusions that deteriorate the hole expanding ratio if an excessively large amount of S is present as well as S causes cracking during hot-rolling. Therefore, the content of S should be as low as possible. The allowable range is 0.03% or less. However, if a certain degree of hole expanding ratio is required, it is preferably 0.01 % or less. Furthermore, if a higher degree of hole expansion is in demand, it is more preferably 0.003% or less.

Al should be added at a content of 0.001 % or more for the purpose of deoxidation of molten steel. However, since Al leads to increase in cost, the upper limit is set to 0.1%. Moreover, since Al causes an increase in the amount of non-metallic inclusions resulting in deterioration of elongation if an excessively large amount of Al is added, it is preferably 0.06% or less. Furthermore, the content of A1 is preferably 0.015% or less in order to increase the bake-hardening amount. If the coiling temperature is 350°C or more, there is concern of promoting the precipitation of AlN which fixes the solute N that is important for bake-hardening, and invalidates it. Therefore, the content of Al is preferably 0.005% or less in order to ensure the bake-hardening amount.

N is typically a preferable element for increasing the bake-hardening amount. However, since the effect is saturated ifN is added at a content of more than 0.01%, the upper limit is set to 0.01%. However, in the case where the product is applied to parts for which aging deterioration presents a problem, since aging deterioration becomes considerable if N is added at a content of more than 0.006%, the content of N is preferably 0.006% or less. Furthermore, if the precondition is such that the product is left for two weeks or more at room temperature after the production and is then subjected to working, the content of N is preferably 0.005% or less from the viewpoint of aging resistance. Moreover, the content of N is more preferably less than 0.003%, taking into consideration the case where the product is left at high temperatures during the summer or where the product is exported across the equator during transport by a marine vessel.

Nb is the most important element in the present invention. Nb provides a dragging effect in a solid state and/or a pinning effect as carbonitride precipitates, thereby suppressing the recovery/recrystallization and grain growth of austenite during rolling or after rolling, delaying the $\gamma/\alpha$ transformation, and decreasing the transformation temperature, and provides an effect of refining crystal grains after transformation. The decrease in transformation temperature has an effect of increasing the supersaturation of the solute C and the solute N which are effective for increasing the bake-hardening amount. Furthermore, refining of crystal grains increases workability in a polygonal ferrite which is generated when cooling is performed at a cooling rate at which pearlite texture is not generated. However, in order to obtain these effects, Nb should be added at a content of 0.005% or more, and preferably more than 0.01 %. On the other hand, the effects are saturated ifNb is added at a content of more than 0.05%, and even worse there is concern of forming carbonitride, to decrease the solute C and the solute N which are effective for increasing the bake-hardening amount.

Ti has an effect of suppressing nucleation of ferrite in $\gamma/\alpha$ transformation. Therefore, Ti is added as required. However, in order to obtain this effect, Ti should be added at least at a content of 0.001 % or more, and preferably 0.005% or more. On the other hand, the upper limit of Ti is set to 0.02%, since there is concern of forming carbonitride, to decrease the solute C and the solute N which are effective for increasing the bake-hardening amount.

B has an effect of improving quench hardenability. Therefore, B is added as required. However, if the content of B is less than 0.0002%, it is inadequate for obtaining that effect, whereas if the content of B is more than 0.002%, slab cracks occur. Accordingly, the content of B is set to 0.0002% or more and 0.002% or less.

Furthermore, for the purpose of imparting strength, any one or two or more of elements of Cu, Ni, Mo, V, or Cr for strengthening the precipitation or solid solution, may be added. However, if Cu is less than 0.2%, Ni is less than 0.1%, Mo is less than 0.05%, V is less than 0.02%, and Cr is less than 0.01%, the effect may not be obtained. Moreover, if Cu is more than 1.2%, Ni is more than 0.6%, Mo is more than 1%, V is more than 0.2%, and Cr is more than 1%, the effect is saturated.

Ca and REM are elements which change the forms of non-metallic inclusions acting as origins of breakage and causing deterioration of workability, and then eliminate their harmful effects. However, they are not effective if added at contents of less than 0.0005%, while their effects are saturated if Ca is added at a content of more than 0.005% or REM is added at a content of more than 0.02%. Consequently, Ca is preferably added at a content of 0.0005 to 0.005%, and REM is preferably added at a content of 0.0005 to 0.02%. Here, REM stands for rare earth metal element, and is one or more selected from Sc, Y, La, Ce, Pr, Nd, Pm, Sm, Eu, Gd, Tb, Dy, Ho, Er, Tm, Yb, and Lu.

The steel having these as the main components may further contain Zr, Sn, Co, Zn, W or Mg at a total content of 1% or less. However, since with Sn there is concern of causing imperfections during hot-rolling, the content of Sn is preferably 0.05% or less.

Next, the following provides a detailed description of the microstructure of the steel sheet in the present invention.

In order to satisfy all of the bake hardenability, the corrosion resistance after coating, and the workability, the microstructure has to be a polygonal ferrite which has an average particle diameter of 2 $\mu$m to 8 $\mu$m, and the grain boundary abundance ratio of solute C and/or solute N has to be 0.28 or lower. As described above, both of excellent bake hardenability and excellent workability can be obtained with a polygonal ferrite having an average grain diameter of 8 $\mu$m or less as a microstructure of the steel sheet.

Next, the following provides a detailed description of the reason for limiting the production process of the present invention.

The hot-rolled steel sheet of the present invention includes: hot-rolled steel sheets which are after casting, cooled down after hot-rolling; hot-rolled steel sheets after hot-rolling; hot-rolled steel sheets applied with a heat treatment on a hot-dip coating line; and hot-rolled steel sheets obtained by applying these hot-rolled steel sheets with a surface treatment.

In the present invention, the production process preceding hot-rolling is not specifically limited. That is, melting is performed in a blast furnace, a converter, an electric furnace, or the like, and then quality governing is conducted in a variety of secondary refining so as to achieve the target contents of the components. Next, casting may be performed by a normal continuous casting, an ingot method, as well as a method such as thin slab casting. Scraps may be used for the raw material. In the case of a slab (steel billet) obtained by continuous casting, it may be either sent directly to a hot-rolling machine as a high temperature cast steel, or cooled down to room temperature and then reheated in a heating furnace, and then hot-rolled.

When the slab is hot-rolled, firstly the slab is heated. The slab reheating temperature (SRT) at this time is set to at least a temperature calculated by the following equation (A).

$$SRT(°C) = 6670/\{2.26 - \log(\%Nb)(\%C)\} - 273 \cdots\cdots (A)$$

Here, %Nb and %C in the equation denote the contents (mass %) of respective elements Nb and C in the slab.

If the reheating temperature is lower than the above temperature, Nb carbonitrides are not adequately dissolved, and therefore effects of Nb such as suppressing the recovery/recrystallization and grain growth of austenite in the following rolling step, and refining crystal grains by delaying the $\gamma/\alpha$ transformation, can not be obtained. Consequently, the slab reheating temperature (SRT) is set to at least a temperature calculated by the above equation. However, if the temperature is 1400°C or higher, the amount of scale-off becomes excessive, resulting in a decrease in yield. Therefore, the reheating temperature is preferably lower than 1400°C. Moreover, if heating is performed at a temperature of lower than 1000°C, operating efficiency is considerably impaired in terms of scheduling. Therefore, the slab reheating temperature is preferably 1000°C or higher. Furthermore, if heating is performed at a temperature of lower than 1100°C, the amount of scale-off becomes small, causing a possibility that inclusions in the surface layer of the slab can not be removed together with the scales by subsequent descaling. Therefore, the slab reheating temperature is preferably 1100°C or higher. The slab heating time is not specifically specified; however, in order to sufficiently promote dissolution of Nb carbonitrides, it is desirable to hold for 30 minutes or more after reaching that temperature. However, if the cast steel after casting is directly sent at a high temperature to be rolled, the time is not limited to the above.

Next, hot-rolling is performed. In the hot-rolling step, firstly, the heated slab is rough-rolled to make a rough rolled bar. In this rough-rolling, for example, the slab is rolled into a thickness of about 80 mm or less, so that the rough rolled bar can be gripped in the roll of the finish-rolling machine. Then, the rough rolled bar is subjected to finish rolling to make a rolled steel. The initiation temperature of finish rolling is set to 1000°C or higher, and more preferably to 1050°C or higher. To achieve this, the rough rolled bar or the rolled steel is preferably heated during the time from the completion of the rough rolling until the initiation of the finish rolling, and/or during the finish rolling, as required.

In particular, in order to stably obtain excellent total elongation in the present invention, it is effective to inhibit the fine precipitation of MnS and so forth. The heating device in this case may be any type; however, a transverse type is preferable since the transverse type can heat uniformly in the thickness direction. Normally, precipitates such as MnS are redissolved in a solid solution during reheating of the slab at about 1250°C, and finely precipitate during the subsequent hot rolling. Consequently, ductility can be improved by controlling the slab reheating temperature to about 1150°C so as to prevent MnS from being redissolved in a solid solution. However, in order to set the final temperature of rolling within the range of the present invention, it is an effective means to heat the rough rolled bar or the rolled steel during the time from completion of rough rolling until initiation of finish rolling, and/or during the finish rolling.

Descaling may be performed during the time from the completion of the rough rolling until the initiation of the finish rolling. In this case, collision pressure P (MPa) and flow rate L (liters/cm$^2$) of high-pressure water on the surface of the steel sheet satisfy the conditional equation of P (MPa) $\times$ flow rate L (liters/cm$^2$) $\geq$ 0.0025.

The collision pressure P of the high-pressure water on the surface of the steel sheet is described in the following manner (refer to "Iron and Steel", 1991, Vol. 77, No. 9, p. 1450).

$$P (MPa) = 5.64 \times P_0 \times V/H^2$$

where, Po (MPa): Liquid pressure,
V (liters/min): Flow rate of liquid from nozzle, and
H (cm): Distance between surface of steel sheet and nozzle.

The flow rate L is described in the following manner.

$$L (liters/cm^2) = V/(W \times v)$$

where, V (liters/min): Flow rate of liquid from nozzle,

W (cm): Width of spraying liquid that contacts the surface of the steel sheet per nozzle, and

v (cm/min): Sheet transport speed.

It is not particularly necessary to specify the upper limit of value of collision pressure P $\times$ flow rate L in order to obtain the effects of the present invention. However, it is preferably set to 0.02 or less, since excessive nozzle wear and other problems occur when the nozzle liquid flow rate is increased.

Furthermore, the maximum height Ry of the finish-rolled steel sheet surface is preferably 15 $\mu$m (15 $\mu$m Ry, 12.5 mm, ln 12.5 mm) or less. This is apparent, as described, for example, on page 84 of the Metal Material Fatigue Design Handbook, Society of Materials Science, Japan, from the fact that the fatigue strength of hot-rolled or acid-washed steel sheet is correlated with the maximum height Ry of the steel sheet surface. Moreover, the subsequent finish rolling is preferably performed within 5 seconds after the descaling so as to prevent reformation of scale.

Furthermore, sheet bars may be joined between the rough rolling and the finish rolling, and the finish rolling may be continuously performed. At that time, the rough rolled bar may be temporarily coiling into the shape of a coil, put in a cover having a warming function if necessary, and then joined after uncoiling.

The finish rolling is performed under a condition where the final temperature (FT) of the finish rolling is in a range of $Ar_3$ transformation point temperature or higher and ($Ar_3$ transformation point temperature + 100°C) or lower. Here, the $Ar_3$ transformation point temperature is simply shown by, for example, the relation with the steel components in accordance with the following calculation equations.

$$Ar_3 = 910 - 310 \times \%C + 25 \times \%Si - 80 \times \%Mneq$$

where, Mneq = %Mn + %Cr + %Cu + %Mo + %Ni/2 + 10(%Nb - 0.02).

Or, in the case of including B, Mneq = %Mn + %Cr + %Cu + %Mo + %Ni/2 + 10(%Nb - 0.02) + 1.

Here, the parameters of %C, %Si, %Mn, %Cr, %Cu, %Mo, %Ni, and %Nb in the equations indicate the respective contents (mass%) of elements C, Si, Mn, Cr, Cu, Mo, Ni and Nb in the slabs.

If the final temperature (FT) of the finish rolling is lower than the $Ar_3$ transformation point temperature, there is a possibility of $\alpha + \gamma$ two phase region rolling; thereby, worked structure remains in the rolled ferrite grains, resulting in the risk of deterioration of ductility, and the crystal grain diameter becomes less than 2 $\mu$m, leading to concern of increasing the yield ratio. Accordingly, the final temperature is set to the $Ar_3$ transformation point temperature or higher. On the other hand, if the final temperature is higher than ($Ar_3$ transformation point temperature + 100°C), a dragging effect and/or a pinning effect for suppressing the recovery/recrystallization and grain growth of austenite by Nb addition, disappear, and thus it becomes difficult to obtain a crystal grain diameter of 8 $\mu$m or less, causing concern of decreasing the bake-hardening amount. Whether or not the roll pass schedule in the respective stands in the finish rolling is specifically limited, the effects of the present invention can be obtained. However, from the viewpoint of accuracy of the sheet shape, the rolling rate at the final stand is preferably lower than 10%.

After the completion of finish rolling, the steel sheet is cooled at an average cooling rate of 80°C/sec or higher to a temperature range of 500°C or lower, to make a hot-rolled steel sheet. If the cooling is initiated at a temperature of the $Ar_3$ transformation point temperature or higher, the microstructure mainly becomes a continuous-cooled microstructure. When the cooling is initiated at a temperature below the $Ar_3$ transformation point temperature, the microstructure contains a polygonal ferrite therein.

In any case, if the cooling rate is less than the above, there is concern that the crystal grains grow and an average particle diameter of 8 $\mu$m or less can not be obtained. The effects of the present invention seem to be obtainable without particularly specifying the upper limit of the cooling rate. However, if it is higher than 500°C/sec, the crystal grain diameter becomes less than 2 $\mu$m, causing concern of increasing the yield ratio. Thus, the cooling rate is preferably 500°C/sec or lower. Furthermore, since there is concern of warp in the sheet due to thermal strain, it is preferably set 250°C/sec or lower. Moreover, a uniform microstructure is desirable in order to improve the burring workability. In order to obtain such a microstructure, the cooling rate is preferably 130°C/sec or higher.

If the cooling is stopped at a temperature higher than 500°C, there is concern of generation of a phase containing bulky carbides such as pearlite, that is unpreferable for workability. Therefore, the cooling is performed to a temperature range of 500°C or lower. However, unless the cooling is initiated within 5 seconds after completion of finish rolling, recrystallization and grain growth of austenite progress, and thus it becomes difficult to obtain a crystal grain diameter of 8 $\mu$m or less, causing concern of decreasing the bake-hardening amount. Accordingly, it is desirable to start cooling within 5 seconds after completion of finish rolling.

After completion of the cooling, coiling is performed. If the coiling temperature is higher than 500°C, C and/or N are easily diffused, and solute C and/or solute N that increase the bake hardenability can not be sufficiently ensured.

Therefore, the coiling temperature is set to 500°C or lower. In order to increase the bake hardenability, it is preferably 450°C or lower. Moreover, in order to obtain the bake-hardening amount of 80 MPa or more, and to suppress the generation of yield point elongation stably at all times, the coiling temperature is more preferably 350°C or lower. Furthermore, from the viewpoint of resistance to aging deterioration, it is even more preferably 150°C or lower. It is not necessary to specifically limit the lower limit of the coiling temperature. However, due to concern of defective appearance caused by rust if the coil is wet for a long time, the most desirable temperature is 50°C or higher.

After completion of the hot rolling step, acid washing may be performed if necessary, and then skinpass at a reduction rate of 10% or less, or cold rolling at a reduction rate of up to about 40% may be performed either offline or inline.

Skinpass rolling is preferably performed at 0.1 % or more and 0.2% or less so as to correct the shape of the steel sheet and to improve ductility due to introduction of mobile dislocations.

In order to galvanize the hot rolled steel sheet after acid washing, the hot rolled steel sheet may be immersed in a galvanizing bath, and if necessary, subjected to alloying treatment.

EXAMPLES

The following provides a more detailed explanation of the present invention through its examples.

Steels A to K having the chemical components shown in Table 2 were melted using a converter and were subjected to continuous casting. Then, they were either sent directly to rough rolling, or reheated prior to rough rolling and were subjected to rough rolling, and finish rolling so as to make the sheet thickness 1.2 to 5.5 mm, and were coiled. The chemical compositions shown in the table are indicated in mass%. Moreover, regarding the steel D, after rough rolling, descaling was performed under a condition where the collision pressure was 2.7 MPa and the flow rate was 0.001 liters/cm$^2$. Furthermore, as shown in Table 4, the steel I was galvanized.

Table 2

| Steel | Chemical composition (unit: mass %) | | | | | | | | |
|---|---|---|---|---|---|---|---|---|---|
| | C | Si | Mn | P | S | Al | N | Nb | Others |
| A | 0.068 | 0.95 | 1.22 | 0.009 | 0.003 | 0.014 | 0.0029 | 0.025 | |
| B | 0.065 | 1.01 | 1.20 | 0.011 | 0.003 | 0.015 | 0.0031 | 0.001 | |
| C | 0.150 | 0.02 | 1.10 | 0.012 | 0.001 | 0.030 | 0.0044 | 0.012 | Ti: 0.02% |
| D | 0.091 | 0.22 | 0.82 | 0.010 | 0.001 | 0.033 | 0.0038 | 0.011 | Cu: 0.29%, Ni: 0.11% |
| E | 0.031 | 0.71 | 1.95 | 0.011 | 0.001 | 0.028 | 0.0050 | 0.027 | Cr: 0.08% |
| F | 0.006 | 0.61 | 0.43 | 0.087 | 0.001 | 0.019 | 0.0019 | 0·015 | Ti: 0.055% |
| G | 0.056 | 0.17 | 1.93 | 0.009 | 0.001 | 0.062 | 0.0020 | 0.031 | Mo: 0.12% |
| H | 0.072 | 0.05 | 1.31 | 0.009 | 0.001 | 0.016 | 0.0030 | 0.030 | V: 0.098% |
| I | 0.052 | 1.02 | 1.76 | 0.010 | 0.001 | 0.005 | 0.0036 | 0.010 | B: 0.0003%, REM: 0.0008% |
| J | 0.210 | 1.45 | 1.51 | 0.007 | 0.001 | 0.032 | 0.0048 | 0.021 | |
| K | 0.058 | 0.89 | 1.72 | 0.010 | 0.001 | 0.051 | 0.0061 | 0.045 | Ca: 0.0015% |

The details of the production conditions are shown in Table 3 and Table 4. Here, "heating rough rolled bar" indicates heating of the rough rolled bar or the rolled steel during the time from completion of rough rolling until initiation of finish rolling and/or during the finish rolling, and indicates whether or not this heating has been carried out. "FT0" indicates the initiation temperature of finish rolling. "FT" indicates the final temperature of finish rolling. "Time until cooling initiation" indicates the time from completion of finish rolling until cooling is initiated. "Cooling rate down to 500°C" indicates the average cooling rate when the rolled steels were cooled in the temperature range from the initiation temperature of cooling down to 500°C. "CT" indicates the coiling temperature.

In the tensile test of the thin steel sheets obtained in this manner, firstly the sample materials were worked into No. 5 test pieces as described in JIS Z 2201, and then subjected to the test in accordance with the method described in JIS Z 2241. In the tables, "YP" indicates the yield point, "TS" indicates the tensile strength, "El" indicates the elongation, and "YR" indicates the yield ratio.

The BH test was performed similarly to the tensile test, in which the steel sheets were worked into No. 5 test pieces as described in JIS Z 2201, preliminary tensile strain of 2% was applied to the test pieces, thereafter heat treatment corresponding to a baking finish treatment at 170°C for 20 minutes, and then the tensile test was performed again. Here, the bake-hardening amount (2%BH) is defined as the value obtained by subtracting a flow stress of the preliminary tensile strain of 2% from the upper yield point obtained in the repeated tensile test.

The corrosion resistance after coating was evaluated in accordance with the following procedure. Firstly, the produced steel sheets were acid-washed, and then subjected to phosphating for adhering a zinc phosphate film of 2.5 $g/m^2$. Furthermore, electrodeposition coating was performed to a thickness of 25 $\mu$m on the top surface thereof, and then baking finish treatment was conducted at 170°C for 20 minutes. Then, the electrodeposition coated film was cut in for a length of 130 mm with a sharp-pointed knife until reaching the steel surface, and sprayed with 5% saline solution at 35°C for 700 hours under a saline spray condition shown in JIS Z 2371. Then, a tape (405A-24 JIS Z 1522, manufactured by Nichiban Company, Ltd.) having a width of 24 mm was adhered over the cut part in parallel therewith, in a length of 130 mm. After this tape was peeled off, the maximum peeling width of the coated film was measured.

On the other hand, the microstructure was examined in accordance with the following method. Firstly, samples cut out from a location of 1/4W or 3/4W of the width (W) of the steel sheets were ground along the cross-section in the direction of rolling, and were then etched using a nital reagent. Observation was performed in the fields at 1/4t of the sheet thickness (t) at 200-fold to 500-fold magnification using an optical microscope, and photographs of metal structure were taken. Here, volume fraction of the microstructure is defined as the area fraction in the photographs of metal structure. Next, the average grain diameter of continuous-cooled microstructure is defined as follows. Firstly, intentionally using the cutting method described in JIS G 0552, which is inherently used to obtain the crystal grain size of polygonal ferrite grains, the grain size number G was obtained from the measurement. Next, using the obtained grain size number G, the number m of the crystal grains per 1 $mm^2$ of the cross-sectional area was obtained from the equation of $m = 8 \times 2^G$. The average grain diameter $d_m$ obtained from this number m using the equation of $d_m = 1/(\sqrt{m})$, is defined as the average grain diameter of continuous-cooled microstructure. Here, the continuous-cooled microstructure (Zw) is a microstructure that is defined as a transformation structure at an intermediate stage between a polygonal ferrite formed by a diffusion mechanism, and martensite in the absence of diffusion, as described in "Recent Research on the Bainite Structure of Low Carbon Steel and its Transformation Behavior-Final Report of the Bainite Research Committee", Bainite Research Committee, Society on Basic Research, the Iron and Steel Institute of Japan, (1994, the Iron and Steel Institute of Japan). That is, as described in sections 125 to 127 of the above reference in terms of the structure observed by optical microscopy, the continuous-cooled microstructure (Zw) is defined as a microstructure which mainly includes Bainitic ferrite ($\alpha^\circ_B$), Granular bainitic ferrite ($\alpha_B$), and Quasi-polygonal ferrite ($\alpha_q$), and additionally includes small amounts of retained austenite ($\gamma_r$) and Martensite-austenite (MA). Regarding the $\alpha_q$, the internal structure does not appear as a result of etching in the same manner as PF, however it has an acicular form, and thus is clearly distinguished from PF. Here, assuming that the boundary length of the target crystal grain is taken to be lq and its equivalent circular diameter is taken to be dq, grains in which their ratio of (lq/dq) satisfies the relation of $lq/dq \geq 3.5$ are $\alpha_q$. The continuous-cooled microstructure (Zw) can be defined as a microstructure including any one or two or more of $\alpha^\circ_B$, $\alpha_B$, $\alpha_q$, $\gamma_r$, and MA, provided that the total small amount of $\gamma_r$ and MA is 3% or less.

Grain boundary abundance ratio of solute C and/or solute N was measured. The grain boundary abundance ratio of solute C and/or solute N in the present invention is defined as a value obtained by dividing the total amount of the solute C and/or the solute N present in the grain boundary, by the total amount of the solute C and/or the solute N. This value may be a value obtained by calculating the sole measurement value of the solute C or the solute N. Alternatively, a value obtained by calculating the added measurement value of the solute C and the solute N, may be also employed.

In order to measure the solute C present in the grain boundary or inside the grains, a three dimensional atom probe method was used. The measurement condition was such that the temperature of the sample location was about 70K, the probe full voltage was 10 to 15 kV, and the pulse ratio was 25%. The respective samples were measured three times respectively in each of the grain boundary and inside the grains, and the average value thereof was used as the representative value. Background noise and the like were eliminated from the measurement value. The obtained value was converted into C-excess ($atm/nm^2$) defined as the atomic density per unit grain boundary area, and then was further converted into the the total amount of grain boundary face segregation from the following equation using the grain boundary volume ratio Rb.

$$\text{the total amount of grain boundary face segregation} = \text{average C-excess} \times \text{Rb} \times 12$$

$$\text{(atomic weight of C)}/56 \text{ (atomic weight of Fe)}$$

Here, Rb was a value defined from the following equation, assuming that one side of a rectangular parallelepiped grain is D and the grain boundary segregation width is W = 2a(a=2nm).

$$Rb = \{D^3 - (D - 2a)^3\}/D^3 = 3(W/D) - 3(W/D)^2 + (W/D)^3$$

The grain boundary abundance ratio of solute C and/or solute N is a value obtained by dividing the total amount of grain boundary face segregation obtained by the above, by the amount of solute C obtained by the internal friction method.

Three steels out of steels and satisfy the range of the present invention. All of these steels are a bake-hardening hot-rolled steel sheet with excellent workability which contains predetermined amounts of steel components, in which the microstructure is a polygonal ferrite having an average particle diameter of 2 to 8 $\mu$m, and the grain boundary abundance ratio of solute C and/or solute N is 0.28 or lower. Consequently, the bake-hardening amount (2%BH), the corrosion resistance, and the yield ratio (YR) evaluated by the method described in the present invention satisfy 70 MPa or more, 4.0 mm or less, and 70% or less, respectively.

Other steels than the above are out of the range of the present invention because of the following reasons. That is, in the steel A-1, since the cooling rate down to 500°C is more than 500°C/sec, the microstructure serving as the object of the present invention can not be obtained, and a sufficiently low yield ratio can not be obtained. In the steel A-8, since the time until cooling initiation is 5 seconds or more, the microstructure serving as the object of the present invention can not be obtained, and a sufficient bake-hardening amount can not be obtained. In the steel A-9, since the final temperature of finish rolling (FT) is lower than the $Ar_3$ transformation point temperature, the microstructure serving as the object of the present invention can not be obtained, and a sufficiently low yield ratio can not be obtained. In the steel B, since the Nb content is out of the range of 0.005 to 0.05 mass % (less than 0.005 mass %), a sufficient bake-hardening amount can not be obtained. In the steel F, since the C content is out of the range of 0.01 to 0.2 mass % (less than 0.01 mass %), and the microstructure serving as the object of the present invention can not be obtained, a sufficient bake-hardening amount can not be obtained. In the steel J, since the C content is out of the range of 0.01 to 0.2 mass % (more than 0.2 mass %), a sufficient bake-hardening amount can not be obtained.

Table 3

| Steel No. | Production condition | | | | | | | | | | | | Microstructure | | | Mechanical property | | | | BH property | Corrosion resistance | Comments |
|---|---|---|---|---|---|---|---|---|---|---|---|---|---|---|---|---|---|---|---|---|---|---|
| | Heating lower limit target (°C) | Heating temp. actual (°C) | Heating rough bar | FT0 (°C) | FT (°C) | $Ar_3$ (°C) | $Ar_3$+100 (°C) | Time until cooling initiation (sec) | Cooling initiation temp. (°C) | Cooling rate to 500°C (°C/sec) | CT (°C) | Microstructure | Crystal grain diameter (μm) | Grain boundary abundance ratio | YP (MPa) | TS (MPa) | El (%) | YR (%) | 2%BH (MPa) | Maximum peeling width (mm) | |
| A-1 | 1073 | 1200 | Performed | 1050 | 900 | 811 | 911 | 1.0 | 885 | 520 | <150 | Zw | 1.8 | 0.20 | 640 | 791 | 22 | 81 | 95 | 1.5 | Comparative steel |
| A-2 | 1073 | 1200 | Performed | 1050 | 900 | 811 | 911 | 1.0 | 885 | 120 | <150 | Zw | 2.2 | 0.19 | 544 | 783 | 25 | 69 | 93 | 1.5 | Reference Example |
| A-3 | 1073 | 1200 | Performed | 1050 | 840 | 811 | 911 | 1.0 | 825 | 120 | <150 | Zw | 4.0 | 0.10 | 512 | 746 | 26 | 69 | 88 | 0.0 | Reference Example |
| A-4 | 1073 | 1200 | Performed | 1050 | 840 | 811 | 911 | 4.0 | 780 | 120 | <150 | Zw+PF | 6.0 | 0.07 | 495 | 728 | 27 | 68 | 85 | 0.0 | Reference Example |
| A-5 | 1073 | 1200 | Performed | 1050 | 840 | 811 | 911 | 4.0 | 780 | 80 | <150 | PF+Zw | 4.0 | 0.22 | 474 | 720 | 28 | 66 | 82 | 1.5 | Reference Example |
| A-6 | 1073 | 1200 | Performed | 1050 | 840 | 811 | 911 | 4.0 | 780 | 80 | 450 | PF | 5.0 | 0.26 | 480 | 733 | 27 | 65 | 78 | 2.0 | Present invention |
| A-7 | 1073 | 1200 | Performed | 1050 | 840 | 811 | 911 | 4.0 | 780 | 80 | 450 | PF | 6.0 | 0.25 | 465 | 717 | 28 | 65 | 75 | 2.0 | Present invention |
| A-8 | 1073 | 1200 | Performed | 1050 | 840 | 811 | 911 | 6.0 | 750 | 80 | 550 | PF | 9.0 | 0.57 | 446 | 693 | 29 | 64 | 57 | 7.5 | Comparative steel |
| A-9 | 1073 | 1200 | Performed | 1050 | 800 | 811 | 911 | 4.0 | 740 | 80 | 450 | Worked PF | 7.0 | 0.37 | 690 | 734 | 11 | 94 | 63 | 7.0 | Comparative steel |
| B | 777 | 1180 | Not performed | 1050 | 900 | 834 | 934 | 6.0 | 810 | 120 | <150 | Zw | 4.0 | 0.10 | 393 | 630 | 31 | 62 | 61 | 0.0 | Comparative steel |

Table 4

| Steel No. | Heating lower limit target temp. (°C) | Heating temp. actual (°C) | Heating rough bar | FT0 (°C) | FT (°C) | Ar₃ (°C) | Ar₃+100 (°C) | Time until cooling initiation (sec) | Cooling initiation temp. (°C) | Cooling rate to 500°C (°C/sec) | CT (°C) | Micro-structure | Crystal grain diameter (μm) | Grain boundary abundance ratio | YP (MPa) | TS (MPa) | EI (%) | YR (%) | 2%BH (MPa) | Maximum peeling width (mm) | Comments |
|---|---|---|---|---|---|---|---|---|---|---|---|---|---|---|---|---|---|---|---|---|---|
| C | 1080 | 1180 | Not performed | 1100 | 850 | 782 | 882 | 4.0 | 790 | 80 | 450 | Zw | 6.5 | 0.14 | 411 | 596 | 28 | 69 | 74 | 1.0 | Reference Example |
| D (*1) | 1014 | 1180 | Not performed | 1100 | 870 | 801 | 901 | 4.0 | 810 | 80 | 450 | PF+Zw | 7.0 | 0.25 | 376 | 562 | 29 | 67 | 71 | 2.0 | Reference Example |
| E | 995 | 1180 | Not performed | 1100 | 800 | 750 | 850 | 1.0 | 785 | 120 | 450 | Zw | 3.5 | 0.26 | 430 | 621 | 27 | 69 | 88 | 2.0 | Reference Example |
| F | 801 | 1180 | Not performed | 1100 | 920 | 893 | 993 | 1.0 | 905 | 40 | 650 | PF | 25.0 | 0.00 | 290 | 468 | 39 | 62 | 0 | 0.0 | Comparative steel |
| G | 1075 | 1180 | Performed | 1100 | 820 | 724 | 824 | 1.0 | 805 | 80 | 450 | Zw+PF | 7.0 | 0.23 | 570 | 811 | 23 | 70 | 70 | 1.5 | Reference Example |
| H | 1101 | 1230 | Performed | 1100 | 850 | 776 | 876 | 4.0 | 790 | 80 | 450 | PF | 4.0 | 0.27 | 340 | 498 | 35 | 68 | 86 | 2.0 | Present invention |
| I (*2) | 948 | 1230 | Performed | 1100 | 800 | 707 | 807 | 1.0 | 785 | 120 | <150 | Zw | 5.5 | 0.07 | 444 | 644 | 31 | 69 | 80 | 0.0 | Reference Example |
| J | 1194 | 1230 | Performed | 1100 | 830 | 760 | 860 | 5.0 | 755 | 40 | 400 | PF+B ±γR | 8.5 | 0.30 | 588 | 844 | 32 | 70 | 43 | 7.0 | Comparative steel |
| K | 1125 | 1230 | Performed | 1100 | 850 | 757 | 857 | 1.0 | 835 | 120 | <150 | Zw | 3.0 | 0.14 | 500 | 751 | 28 | 67 | 94 | 1.0 | Reference Example |

*1; After rough-rolling, descaling with a collision pressure of 2.7 MPa and a flow rate of 0.001 liters/cm² was performed.

*2; Galvanizing was performed.

By using the bake-hardening hot-rolled steel sheet with excellent workability of the present invention, not only parts requiring severe working can be readily formed, but also a bake-hardening amount of 50 MPa or more can be obtained stably in a strength range of 370 to 640 MPa class. Therefore, the present invention can be utilized particularly for a steel sheet for automobile parts, and a process for manufacturing the same, and can contribute to reduction in weight for automobile bodies at low cost.

**Claims**

1. A bake-hardening hot-rolled steel sheet with excellent workability, comprising, in terms of mass %, C of 0.01 to 0.2%, Si of 0.01 to 2%, Mn of 0.1 to 2%, P of 0.1% or less, S of 0.03% or less, Al of 0.001 to 0.1%, N of 0.01% or less, Nb of 0.005 to 0.05%,
   optionally one or more selected from Ti of 0.001 to 0.02%, B of 0.0002 to 0.002%, Cu of 0.2 to 1.2%, Ni of 0.1 to 0.6%, Mo of 0.05 to 1%, V of 0.02 to 0.2%, and Cr of 0.01 to 1%,
   further optionally one or both of Ca of 0.0005 to 0.005% and REM of 0.0005 to 0.02%, and
   as the remainder, Fe and unavoidable impurities,
   wherein the microstructure consists of a polygonal ferrite having an average particle diameter of 2 $\mu$m to 8 $\mu$m, and a grain boundary abundance ratio of solute C and/or solute N is 0.28 or lower, the grain boundary abundance ratio of solute C and/or solute N being a value obtained by dividing the total amount of the solute C and/or the solute N present in the grain boundary, by the total amount of the solute C and/or the solute N.

2. The bake-hardening hot-rolled steel sheet with excellent workability according to claim 1, which is galvanized.

3. A method for manufacturing a bake-hardening hot-rolled steel sheet with excellent workability, the method comprising: heating a slab containing, in terms of mass %, C of 0.01 to 0.2%, Si of 0.01 to 2%, Mn of 0.1 to 2%, P of 0.1% or less, S of 0.03% or less, Al of 0.001 to 0.1%, N of 0.01% or less, Nb of 0.005 to 0.05%, optionally one or more selected from Ti of 0.001 to 0.02%, B of 0.0002 to 0.002%, Cu of 0.2 to 1.2%, Ni of 0.1 to 0.6%, Mo of 0.05 to 1%, V of 0.02 to 0.2%, and Cr of 0.01 to 1%, further optionally one or both of Ca of 0.0005 to 0.005% and REM of 0.0005 to 0.02%, and as the remainder, Fe and unavoidable impurities, to at least a slab reheating temperature SRT satisfying the following equation (A);

$$\text{SRT (°C)} = 6670/\{2.26 - \log(\%Nb)(\%C)\} - 273 \qquad \cdots \quad (A),$$

   and then subjecting the slab to a hot rolling,
   wherein in the hot rolling, the heated slab is subjected to a rough rolling so as to obtain a rough rolled bar,
   the rough rolled bar is subjected to a finish rolling under a condition where the final temperature is in a range of $Ar_3$ transformation point temperature or higher and ($Ar_3$ transformation point temperature + 100°C) or lower, so as to obtain a rolled steel,
   the rolled steel is cooled at a cooling rate of 80°C/sec or higher from a cooling initiation temperature below the $Ar_3$ transformation point temperature to a temperature range of 500°C or lower, so as to obtain a hot rolled steel sheet, and the hot rolled steel sheet is coiled.

4. The method for manufacturing a bake-hardening hot-rolled steel sheet with excellent workability according to claim 3, wherein the initiation temperature of the finish rolling is set to 1000°C or higher.

5. The method for manufacturing a bake-hardening hot-rolled steel sheet with excellent workability according to claim 3, wherein the rough rolled bar and/or the rolled steel is heated during the time until the initiation of the finish rolling and/or during the finish rolling.

6. The method for manufacturing a bake-hardening hot-rolled steel sheet with excellent workability according to claim 3, wherein descaling is performed during the time from completion of the rough rolling until initiation of the finish rolling.

7. The method for manufacturing a bake-hardening hot-rolled steel sheet with excellent workability according to claim 3, wherein the hot-rolled steel sheet obtained by the hot rolling is immersed in a galvanizing bath so as to galvanize the surface of the hot-rolled steel sheet.

8. The method for manufacturing a bake-hardening hot-rolled steel sheet with excellent workability according to claim 7, wherein an alloying treatment is performed after galvanization.

9. The method for manufacturing a bake-hardening hot-rolled steel sheet with excellent workability according to claim 3, wherein the cooling of the rolled steel is started within 5 seconds after the completion of the finish rolling.

**Patentansprüche**

1. Warmgewalztes Bake-Hardening-Stahlblech mit ausgezeichneter Umformbarkeit, das in Form von Masse-% aufweist: 0,01 bis 0,2% C, 0,01 bis 2% Si, 0,1 bis 2% Mn, 0,1% oder weniger P, 0,03% oder weniger S, 0,001 bis 0,1% Al, 0,01% oder weniger N, 0,005 bis 0,05% Nb,
optional ein oder mehrere, die ausgewählt sind aus: 0,001 bis 0,02% Ti, 0,0002 bis 0,002% B, 0,2 bis 1,2% Cu, 0,1 bis 0,6% Ni, 0,05 bis 1% Mo, 0,02 bis 0,2% V und 0,01 bis 1% Cr,
ferner optional 0,0005 bis 0,005% Ca und/oder 0,0005 bis 0,02% REM, und
als Rest Fe und unvermeidliche Verunreinigungen,
wobei die Mikrostruktur aus einem polygonalen Ferrit mit einem mittleren Teilchendurchmesser von 2 $\mu$m bis 8 $\mu$m besteht, und
ein Korngrenzenhäufigkeitsverhältnis von gelöstem C und/oder gelöstem N 0,28 oder weniger beträgt; wobei das Korngrenzenhäufigkeitsverhältnis von gelöstem C und/oder gelöstem N ein Wert ist, der durch Dividieren der Gesamtmenge des gelösten C und/oder des gelösten N, das in der Korngrenze vorhanden ist, durch die Gesamtmenge des gelösten C und/oder des gelösten N erhalten wird.

2. Warmgewalztes Bake-Hardening-Stahlblech mit ausgezeichneter Umformbarkeit nach Anspruch 1, das galvanisiert ist.

3. Verfahren zum Herstellen eines warmgewalzten Bake-Hardening-Stahlblechs mit ausgezeichneter Umformbarkeit, wobei das Verfahren ausweist: Erwärmen einer Bramme, die in Form von Masse-% enthält: 0,01 bis 0,2% C, 0,01 bis 2% Si, 0,1 bis 2% Mn, 0,1% oder weniger P, 0,03% oder weniger S, 0,001 bis 0,1% Al, 0,01% oder weniger N, 0,005 bis 0,05% Nb, optional ein oder mehrere, die ausgewählt sind aus: 0,001 bis 0,02% Ti, 0,0002 bis 0,002% B, 0,2 bis 1,2% Cu, 0,1 bis 0,6% Ni, 0,05 bis 1% Mo, 0,02 bis 0,2% V und 0,01 bis 1% Cr, ferner optional 0,0005 bis 0,005% Ca und/oder 0,0005 bis 0,02% REM, und als Rest Fe und unvermeidliche Verunreinigungen, auf mindestens eine Brammennacherwärmungstemperatur SRT, die die folgende Gleichung (A) erfüllt;

$$SRT\ (°C) = 6670/\{2{,}26 - \log(\%Nb)(\%C)\} - 273\ ....\ (A),$$

und dann Unterziehen der Bramme einem Warmwalzen,
wobei beim Warmwalzen die erwärmte Bramme einem Vorwalzen unterzogen wird, um einen vorgewalzten Stab zu erhalten,
der vorgewalzte Stab einem Fertigwalzen unter einer Bedingung unterzogen wird, wo die Endtemperatur in einem Bereich von $Ar_3$-Umwandlungspunkttemperatur oder höher und ($Ar_3$-Umwandlungspunkttemperatur + 100°C) oder weniger liegt, um Walzstahl zu erhalten,
der Walzstahl mit einer Abkühlgeschwindigkeit von 80°C/s oder mehr von einer Abkühlungsanfangstemperatur unterhalb der $Ar_3$-Umwandlungspunkttemperatur auf einen Temperaturbereich von 500°C oder weniger abgekühlt wird, um ein warmgewalztes Stahlblech zu erhalten, und das warmgewalzte Stahlblech aufgerollt wird.

4. Verfahren zum Herstellen eines warmgewalzten Bake-Hardening-Stahlblechs mit ausgezeichneter Umformbarkeit nach Anspruch 3, wobei die Anfangstemperatur des Fertigwalzens auf 1000°C oder mehr festgelegt wird.

5. Verfahren zum Herstellen eines warmgewalzten Bake-Hardening-Stahlblechs mit ausgezeichneter Umformbarkeit nach Anspruch 3, wobei der vorgewalzte Stab und/oder der Walzstahl während der Zeit bis zum Beginn des Fertigwalzens und/oder während des Fertigwalzens erwärmt wird.

6. Verfahren zum Herstellen eines warmgewalzten Bake-Hardening-Stahlblechs mit ausgezeichneter Umformbarkeit nach Anspruch 3, wobei während der Zeit von der Beendigung des Vorwalzens bis zum Beginn des Fertigwalzens ein Entzundern durchgeführt wird.

**7.** Verfahren zum Herstellen eines warmgewalzten Bake-Hardening-Stahlblechs mit ausgezeichneter Umformbarkeit nach Anspruch 3, wobei das durch das Warmwalzen erhaltene warmgewalzte Stahlblech in ein Galvanisierungsbad eingetaucht wird, um die Oberfläche des warmgewalzten Stahlblechs zu galvanisieren.

**8.** Verfahren zum Herstellen eines warmgewalzten Bake-Hardening-Stahlblechs mit ausgezeichneter Umformbarkeit nach Anspruch 7, wobei nach der Galvanisierung eine Legierungsbehandlung durchgeführt wird.

**9.** Verfahren zum Herstellen eines warmgewalzten Bake-Hardening- Stahlblechs mit ausgezeichneter Umformbarkeit nach Anspruch 3, wobei das Abkühlen des Walzstahls innerhalb von 5 Sekunden nach der Beendigung des Fertigwalzens begonnen wird.


**Revendications**

**1.** Tôle d'acier laminée à chaud, durcie par cuisson et présentant une aptitude élevée au façonnage, comprenant, en pourcentage massique, de 0,01 à 0,2 % de C, de 0,01 à 2 % de Si, de 0,1 à 2 % de Mn, jusqu'à 0,1 % de P, jusqu'à 0,03 % de S, de 0,001 à 0,1 % d'Al, jusqu'à 0,01 % de N, de 0,005 à 0,05 % de Nb,
facultativement un ou plusieurs éléments sélectionnés entre : de 0, 001 à 0,02 % de Ti, de 0,0002 à 0,002 % de B, de 0,2 à 1,2 % de Cu, de 0,1 à 0,6 % de Ni, de 0,05 à 1 % de Mo, de 0,02 à 0,2 % de V, et de 0,01 à 1 % de Cr,
facultativement aussi, soit de 0,0005 à 0,005 % de Ca, soit de 0,0005 à 0,02 % de REM, soit les deux, et
le reste étant composé de Fe et d'impuretés inévitables,
où la microstructure consiste en une ferrite polygonale à diamètre de particule moyen compris entre 2 $\mu$m et 8 $\mu$m, et un rapport de teneur de solution de C et/ou de solution de N aux joints de grain étant inférieur ou égal à 0,28, ledit rapport de teneur de solution de C et/ou de solution de N aux joints de grain étant une valeur obtenue par division de la teneur totale de solution de C et/ou de solution de N présentes dans les joints de grain par la teneur totale de solution de C et/ou de solution de N.

**2.** Tôle d'acier laminée à chaud, durcie par cuisson et présentant une aptitude élevée au façonnage selon la revendication 1, laquelle est galvanisée.

**3.** Procédé de fabrication d'une tôle d'acier laminée à chaud, durcie par cuisson et présentant une aptitude élevée au façonnage, ledit procédé comprenant : le chauffage d'une brame comprenant, en pourcentage massique, de 0,01 à 0,2 % de C, de 0,01 à 2 % de Si, de 0,1 à 2 % de Mn, jusqu'à 0,1 % de P, jusqu'à 0,03 % de S, de 0,001 à 0,1 % d'Al, jusqu'à 0,01 % de N, de 0,005 à 0,05 % de Nb,
facultativement un ou plusieurs éléments sélectionnés entre : de 0, 001 à 0,02 % de Ti, de 0,0002 à 0,002 % de B, de 0,2 à 1,2 % de Cu, de 0,1 à 0,6 % de Ni, de 0,05 à 1 % de Mo, de 0,02 à 0,2 % de V, et de 0,01 à 1 % de Cr,
facultativement aussi, soit de 0,0005 à 0,005 % de Ca, soit de 0,0005 à 0,02 % de REM, soit les deux, et le reste étant composé de Fe et d'impuretés inévitables, à au moins une température de réchauffage de brame SRT satisfaisant à l'équation (A) suivante :

$$SRT(° C.)=6670/\{2.26-\log(\% Nb)(\% C)\}-273 \qquad ... \qquad (A),$$

avant de soumettre la brame à un laminage à chaud,
la brame chauffée étant pendant le laminage à chaud soumise à un laminage brut de manière à obtenir une barre laminée brute,
la barre laminée brute étant soumise à un laminage de finition dans des conditions où la température finale est comprise dans une plage entre au moins la température de point de transformation $Ar_3$ et au plus la température de point de transformation $Ar_3$ + 100° C, de manière à obtenir un acier laminé,
l'acier laminé étant refroidi à une vitesse de refroidissement minimale 80° C/sec, d'une température de début de refroidissement inférieure à la température de point de transformation $Ar_3$ à une température maximale de 500° C, de manière à obtenir une tôle d'acier laminée à chaud, et bobinage de la tôle d'acier laminée à chaud.

**4.** Procédé de fabrication d'une tôle d'acier laminée à chaud, durcie par cuisson et présentant une aptitude élevée au façonnage selon la revendication 3, où la température initiale du laminage de finition est fixée à un minimum de 1000° C.

**5.** Procédé de fabrication d'une tôle d'acier laminée à chaud, durcie par cuisson et présentant une aptitude élevée au façonnage selon la revendication 3, où la barre laminée brute et/ou l'acier laminé sont chauffés avant le début du laminage de finition et/ou pendant le laminage de finition.

**6.** Procédé de fabrication d'une tôle d'acier laminée à chaud, durcie par cuisson et présentant une aptitude élevée au façonnage selon la revendication 3, où un décalaminage est effectué entre la fin du laminage brut et le début de laminage de finition.

**7.** Procédé de fabrication d'une tôle d'acier laminée à chaud, durcie par cuisson et présentant une aptitude élevée au façonnage selon la revendication 3, où la tôle d'acier laminée à chaud obtenue par laminage à chaud est trempée dans un bain de galvanisation pour galvaniser la surface de la tôle d'acier laminée à chaud.

**8.** Procédé de fabrication d'une tôle d'acier laminée à chaud, durcie par cuisson et présentant une aptitude élevée au façonnage selon la revendication 7, où un traitement d'alliage est effectué après galvanisation.

**9.** Procédé de fabrication d'une tôle d'acier laminée à chaud, durcie par cuisson et présentant une aptitude élevée au façonnage selon la revendication 3, où le refroidissement de l'acier laminé est déclenché dans les 5 secondes suivant la fin du laminage de finition.

## FIG. 1

## FIG. 2

## FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000169935 A
- JP 2000169936 A
- JP 10183301 A
- JP 2000297350 A
- US 20040007298 A
- EP 0952235 A

### Non-patent literature cited in the description

- **LEYSEN F. et al.** Dilatometric Measurements on the Transformation Behaviour of Nb-added CSiMn TRIP Steels. *Mat. Sc. Forum,* 07 July 2003, vol. 426-432 (2), 1101, 6
- Recent Research on the Bainite Structure of Low Carbon Steel and its Transformation Behavior-Final Report of the Bainite Research Committee. Bainite Research Committee, Society on Basic Research, the Iron and Steel Institute of Japan. Iron and Steel Institute of Japan, 1994
- *Iron and Steel,* 1991, vol. 77 (9), 1450
- Recent Research on the Bainite Structure of Low Carbon Steel and its Transformation Behavior-Final Report of the Bainite Research Committee. Bainite Research Committee, Society on Basic Research. Iron and Steel Institute of Japan, 1994